# EUROPEAN PATENT SPECIFICATION

(11) **EP 1 428 791 B1**
(45) Date of publication and mention of the grant of the patent: **09.08.2006**
(21) Application number: 03450139.5
(22) Date of filing: 02.06.2003
(51) Int. Cl.: B67D 1/04, A47J 43/12, B65D 83/14, B65D 83/16

(54) **Siphon head**
Siphonkopf
Tête de siphon

(30) Priority: 12.12.2002 HU 0204316
(43) Date of publication of application: 16.06.2004
(73) Proprietor: LISS Patrongyárto,Tölto és Forgalmazo Kft., 9653 Répcelak, (HU)
(72) Inventor: Làdi, Zsolt Dr., 9653 Répcelak (HU)
(74) Representative: Müllner, Erwin

(56) References cited:
- CH-A- 354 687
- DE-A- 3 018 479
- GB-A- 425 829
- US-A- 2 506 837
- US-A- 2 600 660
- US-A- 2 928 576
- US-A- 3 632 045
- US-A- 4 669 639
- US-A- 5 263 616

## Description

The invention relates to a siphon head according to the preamble of claim 1.

There are siphon heads for soda-water siphons on the one hand and siphon heads for whippers on the other hand.

The expression whipped cream does also cover mousses, foams and other liquid mixtures of creamy or fluffy consistence.

A siphon head according to the preamble of claim 1 is known from US-2 506 837.

Existing whippers have a container which must only be filled ¾ the volume with the liquid, so the necessary air volume of ¼ of the total whipper capacity remains available in the bottle for the whipping process. If the user does not follow the relevant instructions the whipper will be overfilled creating a relative safety hazard and causing bad whipping results.

Known proposals for realization of siphon heads substantially relate to gas introducing valves and cream dispensing valves.

HU 170431 A relates to a siphon head which is hygienic and easy to handle, wherein a flanged rubber pipe positioned in the liquid-area is used as a gas-inlet valve. Centre of rotation of an actuating arm operating the siphon head can be set in a forced path. This forced path also enables easy assembly and disassembly of the components. With a siphon head of this kind it is ensured that no liquid or pulpy material is left in it after cleaning so it meets the requirements of hygiene. Due to the design and placement of the components the siphon will have an extended life time.

HU 216893 A describes a siphon-set having a bottle and a head for producing soda-water and whipped cream. The head comprises a threaded pipe-end for joining up and opening of a sparklet and a valve mechanism which can be connected to an actuating arm for dispensing the pressurized content of the bottle. A seat is provided in the siphon head in which replaceable dispensing tubes may be kept in position for example by using friction connection. The siphon-set comprises at least one cream dispensing tube and at least one soda-water dispensing tube. The threaded siphon head can be attached onto the bottle. The head is provided with a threaded end comprising a piercing pin and a sealing onto which the threaded cartridge holder can be attached, and a mechanism and a passage system which enables dispensing of soda-water or whipped cream from the bottle. The dispensing tube is placed in a seat in a releasable manner. Typically, a sleeve is formed in the siphon head in which a valve chamber comprising a valve body movable up and down is provided; a spring is placed above the valve body the spring is obstructed in its movements on the side opposite the valve body; a groove is formed on a side of the valve body into which a lifting toe protrudes. The lifting toe is operated with an actuating element extending from the siphon head so that the lifting toe and in this way also the valve body is displaced in the direction of the spring. Communicating paths in communication with the inner space of the bottle and also with the seat lead into the end part of the sleeve opposite the end part containing the spring, which paths are in a closed state due to the strength of the spring when the valve body is at rest.

US 4 669 639 A describes a dispensing and safety valve assembly for use in siphons and the like. According to this document a safety valve is placed into the end part being near the siphon body of the tube constituting the dispensing valve, which opens when the pressure in the bottle reaches a pre-selected threshold value, in this way development of inadmissible pressure in the siphon is prevented. This accomplishment is too complicated and is difficult to clean, although it may be useful in case of conventional siphons where overfilling of the liquid results in excessive pressure increase.

A common disadvantage of the known siphon heads is that overfilling may occur and with the exception of the latter US patent they do not have a safety assembly.

The aim of the present invention is to provide a simple and safe siphon head for a whipper, which prevents the siphon from being overfilled. This happens more frequently today, since in the last few years, cream whippers are marketed as universal whipping devices and therefore users are mixing different ingredients - which makes it harder to measure the total content. In addition users will normally fill up an empty bottle completely as they think that otherwise it would be inefficient waisting of volume. This aim is achieved by the features of claim 1.

The inventors have realized that when the inner capacity of the siphon head is increased significantly, then this excess capacity prevents the siphon from being overfilled. As a result, the inner pressure of the siphon practically will never reach an inadmissible level.

Particularly, the siphon head is provided with a hood accommodating a shaping tube as mouthpiece and a handling unit as trigger. In a prefered version the hood covers the cartridge piercing unit and a surrounding rest for fastening a pressure gas cartridge closed either by a pierceable plate or by a ball valve which ball is displaceable by the piercing unit. In a further embodyment the siphon body has a balloon-shaped bottle design.

A more detailed description of the invention will be given with reference to the accompanying drawings, in which:
Figure 1 is a cross-sectional view of a possible embodiment of the siphon according to the invention,
Figure 2 shows the cross-section of the hood having a shaping tube or mouthpiece of a special kind,
Figure 3 shows the cross-section of the hood having a shaping tube or mouthpiece of another kind,
Figure 4 shows the partial cross-section of the siphon according to the invention provided with a cartridge holder and with the hood removed,
Figure 5 shows the cross-section of the siphon head without the dispensing valve and the piercing unit,
Figure 6 shows a partial cross-section of a more conventional siphon head accomplished according to the invention and provided with a cartridge holder,
Figure 7 shows the partial cross-section of a conventional siphon head accomplished according to the invention and provided with a piercing unit covered by a hood, and
Figure 8 is the cross-section of the dispensing valve.

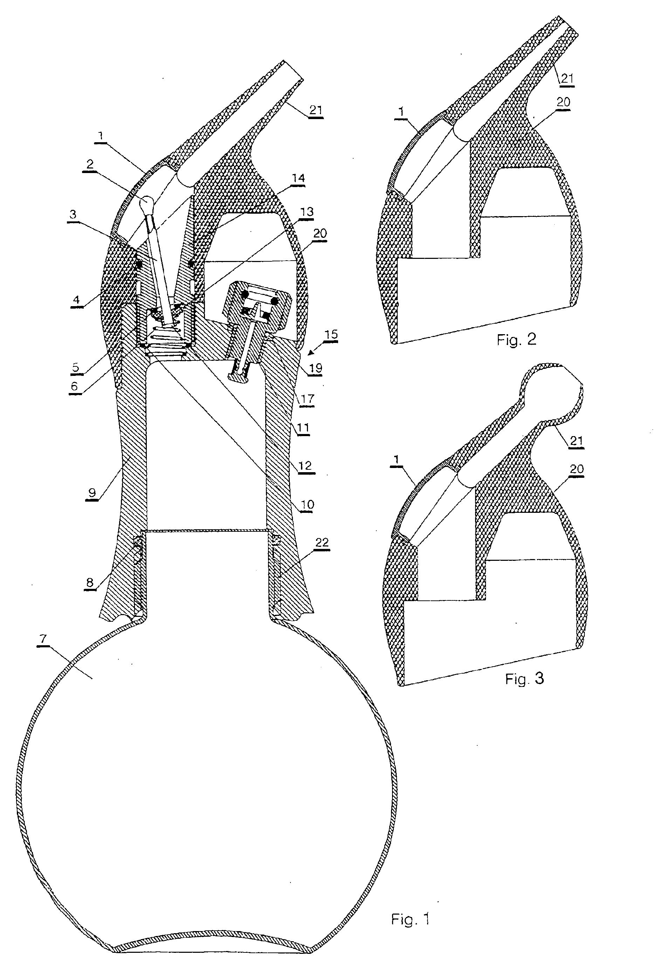

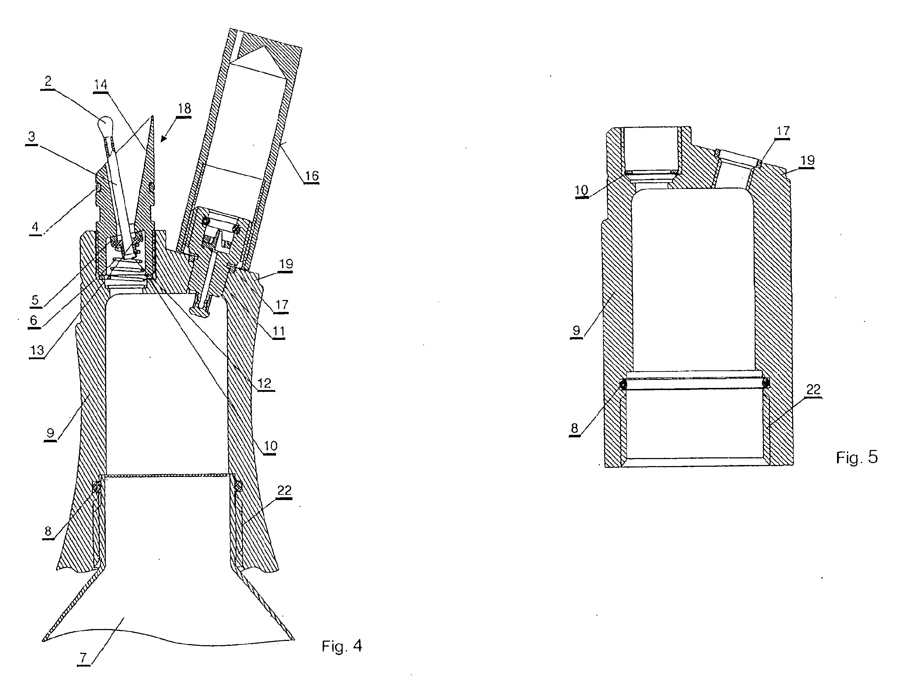

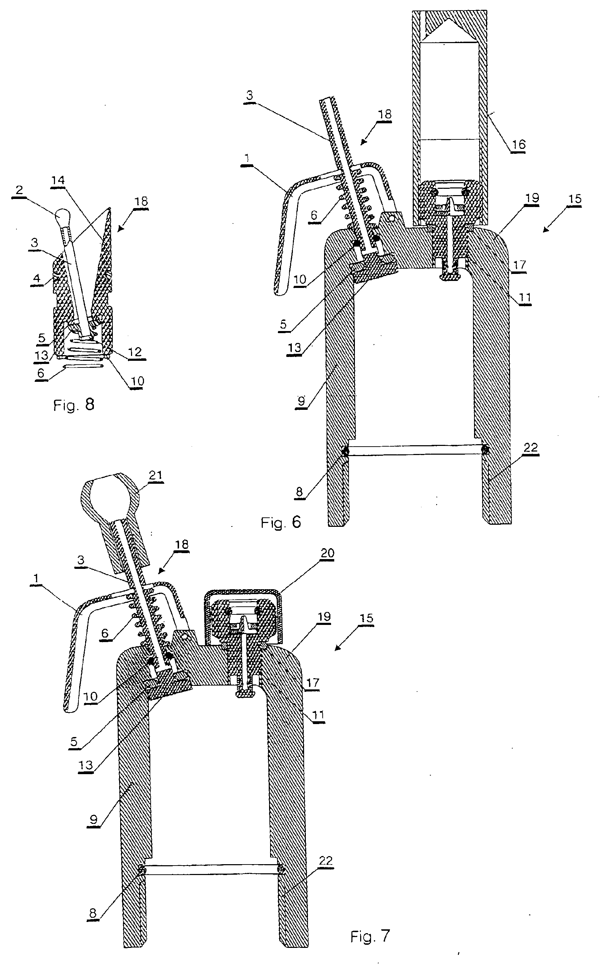

Siphon head 15 according to the invention (figure 1) is developed for use with a siphon suitable for preparing whipped cream (hereinafter called "whipper") also. Similar to known solutions the head consists of a head-piece 19 with thread 22. Head-piece 19 is provided with a piercing unit 11 for piercing a pressure gas cartridge, and a dispensing valve 18 (figure 8). Siphon head 15 is attached to siphon body 7 by means of thread 22, and in order to achieve proper sealing a second O-ring 8 is placed in between siphon head 15 and thread 22. A neck part 9 is formed between head-piece 19 of the siphon head 15 and thread 22 (figure 5). The neck part has an inside capacity which is between one-sixth and the half of the capacity of the inside capacity of the siphon body 7 (figure 1). Dispensing valve 18 is formed from a valve chamber 14, a sealing 10 and an opening means 3 or valve rod which is supported by a conical spring 6. At one end of the opening means 3 a shutter foot 13 or valve plate, at the other end a rubber ball 2 is placed. Spring 6 presses the shutter foot 13 against a valve opening with seal 5. Opening means 3 is formed from a tube one end of which near the foot 13 is closed by a pressure sensitive bursting plate 12 or disc, which acts as a safety-release-valve or as overpressure-valve in case of unwanted pressure increases e.g.: if whipper is heated. The other end of the opening means 3 is closed by the rubber ball 2 (figures 4, 8).

In the embodiments according to figures 6 and 7 a conventional dispensing valve 18 and a conventional piercing unit 11 for pressure gascartridges are used, but also, the neck part 9 is formed between head-piece 19 and thread 22 according to the invention. In both cases sealing 10 and valve-seal 5 are used in order to achieve proper sealing. The same piercing unit 11 is used in both embodiments, which fits into head-piece 19 by means of a thread, and is connected with sealing ring 17 against leakage. When cartridge holder 16 is screwed on, piercing unit 11 pierces and opens the cartridge and the pressure gas flows into the filled siphone body and hollow neck part 9. Then the cartridge holder 16 together with the empty cartridge may be removed. The piercing unit 11 includes a back pressure valve. The cartridge to be used may be a flanged or welded or valve closed cartridge. Valve closed cartridges can be pressed by hand against the piercing unit 11 the pin or needle of which pushes back a ball in the cartridge valve thus opening the cartridge. When the cartridge is removed, then siphon head 15 according to figure 1 can be covered by hood 20. Hood 20 also covers piercing unit 11 and dispensing valve 18, and at the same time it accommodates shaping tube 21 or mouthpiece and handling unit 1 or trigger (figures 2 and 3).

In order to securely keep hood 20 in position and to isolate it from the cream streaming forth a first O-ring 4 is used (Fig. 1). In the embodiments shown in figures 6 and 7 hood 20 covers only piercing unit 11. In this case shaping tube 21 is separate and is coupled to the opening means in a form-fitting way. Existing whippers with a cylindrical container design tend to over-whipping heavy cream with a fat content of over 30%. To avoid this effect, a balloon-shaped siphon body 7 is used. In this way the liquid slowly flows from the bottom towards the top of the siphon body 7, to the siphon head 15, every time when the whipper is turned upside down for dispensing.

Operation of the whipper according to the invention is similar to known whippers. A user may now fill the siphon body 7 with the liquid cream until full. Then the user connects the siphon head 15 with the siphon body 7 by thread 22. The second O-ring 8 ensures a perfect sealing. Then the cartridge is placed into the cartridge holder 16 and the cartridge holder 16 is driven (for example by means of a thread) onto piercing unit 11 which is mounted with the sealing ring 17 in the head-piece 19, to the point where the piercing pin opens the cartridge for gas outflow (either by puncturing the cartridge or pushing open a valve in the cartridge). Then the incoming gas (N20) produces whipped cream. At this point the dispensing valve 18 is in its closed state. This state is ensured by the sealing 10 of the valve chamber 14 and the valve-seal 5 which is between the foot 13 of the opening means 3 and valve chamber 14. Proper position of foot 13 is ensured by a conical spring 6. In the embodiment shown in figure 4 opening means 3 or rod can be turned easily to the right and the breadth of the opening by excentrically lifting off the foot 13 from the seat can be controlled properly for dispensing of the whipped cream. The angle of deviation of the rod of the opening means corresponds to the V-shaped slot in the housing of the valve 18 above foot 13. The rod rests at one end of this slot in the closing position and at the other end in the maximum opening position. A smooth handling is further promoted by mounting an elastic rubber ball 2 onto opening means 3. As the cartridge holder 16 can be removed after charging, handling of the siphon as well as dispensing of the whipped cream become easier by use of hood 20. Hood 20 may be snapped on head-piece 19 of siphon head 15 in a form-fitting way. The first O-ring 4 on the superficies of valve chamber 14 helps to securely keep hood 20 in position. Then hood 20 covers the piercing unit 11 and the dispensing valve 18. Opening means 3 of dispensing valve 18 may be operated with handling unit 1 which may be a resilient push-button or trigger button in the hood 20. The handling unit 1 is connected to the rubber ball 2 which is mounted on the end of opening means 3. When handling unit 1 is pushed, opening means 3 will tilt against conical spring 6, and opens dispensing valve 18 at valve-seal 5. At this point whipped cream is able to flow out through the inside of valve chamber 14 and shaping tube 21, if the siphon is positioned upside down. If the pressure within the siphon increases significantly, the pressure sensitive bursting plate 12 being on the inside end of the opening means 3 near the siphon body 7 will break. The rubber ball 2 which is placed on the end of the opening means 3 being near the handling unit 1 comes off and the pressure in the siphon body 7 and in the siphon head 15 will decrease. When shaping tube 21 is formed as a part of the hood 20, then hoods 20 with differently shaped shaping tubes 21 may be used for the siphon head 15 (figures 2 and 3). Of course, different shaping tubes 21 on hood 20 may be realized and can be exchangeable fittet in the hoods.

Operation of siphon heads shown in figures 6 and 7 is similar to the operation of a conventional siphon head. The only difference is that a neck part 9 is formed between head-piece 19 and thread 22. Siphon body 7 can be filled with the liquid cream until full, and siphon head 15 is attached to siphon body 7 by means of thread 22. The second O-ring 8 ensures the perfect sealing. Then nitrous-oxide is filled in by using the known method. The cartridge holder 16 is removed after discharging of the cartridge, and piercing unit 11 with sealing ring 17 is covered with hood 20 having a function and design different from that of the hood described with reference to figures 2 and 3. Dispensing valve 18 is operated by pushing back the handling unit 1 or trigger knob against the power of the conical spring 6 so that opening means 3 is pushed into siphon head 15. At this point foot 13 and valve-seal 5 slide into the siphon head 15 to such an extent that free outflow of the whipped cream through concentric passages formed in the opening means 3 becomes possible. Sealing 10 prevents the cream from flowing outside the opening means 3. Any of the known shaping tubes 21 may be attached to opening means 3.

The advantage of the present invention is that the gas is present in the siphon head instead of being in a partly filled siphon body since the siphon head is designed to hold the gas volume necessary for the whipping process thereby always guaranteeing the safe and convenient handling of the whipper. The user may simply fill the siphon body until full. The special dispensing valve designed with tilting opening means having a foot enables the user to dispense the cream in a more controllable manner, with a push of a fingertip. The handling unit is placed in an angle towards the valve so that the largest possible opening of the valve is caused. By pressing the valve down from its seat, the head may be cleaned easily, without disassembling it. In addition, there is only one visible button on the surface of the head, making it obvious to the user how to operate the whipper. The special balloon-shaped bottle design helps avoiding over-whipping of the cream which often occurs in case of conventional whippers when a heavy cream with a fat content of over 30% is used. The balloon-shaped design enables the liquid to slowly flow from the bottom to the top of the whipper, every time it is turned upside down for dispensing. It can be operated with flanged, welded or valve closed cartridges. It has only a few moving parts and hence it is easy to use and to be cleaned. By means of using an O-ring instead of flat-washers, the force that is required to close the whipper after it was filled with content becomes much smaller. If opened under pressure release slots at both, the head-thread and on the top of the bottle-neck, will allow the pressure to escape before head and bottle-thread disengage. Moreover, the opening force after the whipper is empty decreases considerably, making its handling more consumer friendly then existing whippers. The special valve design allows all common cartridges to be used as sources of N2O. Therefore the siphon head according to the invention can be used with or without a cartridge holder, depending on the used type of cartridge.

## Claims

1. Siphon head (15) suitable for preparing whipped cream, in combination with a hood, which head is formed from a threaded (22) head-piece (19) provided with a dispensing valve (18), the head-piece (19) being suitable to be attached to a siphon body (7), a neck part (9) being formed between the top part of the head-piece (19) and said threaded part (22) of said siphon head (19), said neck part (9) having an inside capacity which is between one-sixth and the half of the capacity of the inside capacity of said siphon body (7), **characterized in that** the hood is suitable to cover the siphon head, the hood accommodating a shaping tube (21) as mouthpiece and a handling unit (1) as actuator of trigger for the valve the head piece being provided with a cartridge piercing unit (11).

2. Siphon head according to claim 1, **characterized in that** the hood (20) covers the cartridge piercing unit (11) and a surrounding rest for fastening a pressure cartridge, closed either by a piercable plate or by a ball-valve which ball is displaceable by the piercing unit.

3. Siphon head according to claim 1 or 2, **characterized in that** said siphon body (7) has a balloon-shaped bottle design.

## Patentansprüche

1. Siphonflaschenkopf (15), der zur Herstellung von Schlagobers geeignet ist, in Verbindung mit einer Kappe, wobei der Kopf von einem, mit Gewinde (22) versehenen Kopfstück (19) ausgeht, welches ein Abgabeventil (18) aufweist, und das Kopfstück an den Behälter einer Siphonflasche (7) anschließbar ist, wobei ein Halsteil (9) zwischen dem oberen Teil des Kopfstücks (19) und dem vorgenannten, mit Gewinde versehenen Teil (22) des Siphonflaschenkopfes (15) gebildet ist, wobei der Halsteil (9) ein inneres Aufnahmevolumen hat, das zwischen einem Sechstel und der Hälfte des inneren Aufnahmevolumens des Behälters der Siphonflasche (7) liegt, **dadurch gekennzeichnet, dass** die Kappe als Abdeckung für den Siphonflaschenkopf vorgesehen ist und die Kappe ein Formrohr (21) als Mundstück und einen Betätigungsteil (1) als Auslöser für das Ventil umfasst, wobei das Kopfstück eine Vorrichtung (11) zum Durchstoßen der Patrone aufweist.

2. Siphonflaschenkopf gemäß Anspruch 1, **dadurch gekennzeichnet, dass** die Kappe (20) die Vorrichtung (11) zum Durchstoßen der Patrone und einen umgebende Halterung zum Anbringen einer Druckpatrone abdeckt, die entweder mit einer zu durchstoßenden Platte oder durch ein Kugelventil geschlossen ist, wobei die Kugel von der Durchstoßvorrichtung verdrängt wird.

3. Siphonflaschenkopf gemäß Anspruch 1 oder 2, **dadurch gekennzeichnet, dass** der vorgenannte Behälter der Siphonflasche (7) ballonförmig ausgebildet ist.

## Revendications

1. Tête de siphon (15) appropriée pour préparer de la crème fouettée, en combinaison avec un capuchon, dont la tête est formée à partir d'un élément de tête (19) taraudé (22) pourvu d'une valve de distribution (18), l'élément de tête (19) étant approprié pour être fixé à un corps de siphon (7), une partie de col (9) étant formée entre la partie supérieure de l'élément de tête (19) et ladite partie taraudée (22) de ladite tête de siphon (19), ladite partie de col (9) ayant une capacité intérieure comprise entre un sixième et la moitié de la capacité de la capacité intérieure dudit corps de siphon (7), **caractérisée en ce que** le capuchon est approprié pour couvrir la tête de siphon, le capuchon logeant un tube de mise en forme (21) en tant qu'embout, et une unité de manipulation (1) en tant qu'organe de commande du déclencheur pour la valve, l'élément de tête étant pourvu d'une unité (11) de perforation de cartouche.

2. Tête de siphon selon la revendication 1, **caractérisée en ce que** le capuchon (20) recouvre l'unité (11) de perforation de cartouche et un support l'entourant pour fixer une cartouche de pression, fermée soit par une plaque perforable, soit par une valve à bille dont la bille est déplaçable par l'unité de perforation.

3. Tête de siphon selon la revendication 1 ou 2, **caractérisée en ce que** ledit corps de siphon (7) est réalisé comme une bouteille en forme de ballon.
